# EUROPEAN PATENT APPLICATION

(11) **EP 4 653 714 A1**
(43) Date of publication of application: **26.11.2025**
(21) Application number: 24810154.5
(22) Date of filing: 25.04.2024
(51) Int. Cl.: F16C 29/04, F16C 29/00, B62D 1/185

(54) **LINEAR BEARING, AXIALLY TELESCOPIC ADJUSTMENT ASSEMBLY, AND VEHICLE**

(30) Priority: 23.05.2023 CN 202310596249
(71) Applicant: Zhejiang Geely Holding Group Co., Ltd., Hangzhou, Zhejiang 310051 (CN); Zhejiang Liankong Technologies Co., Ltd., Ningbo, Zhejiang 315336 (CN)
(72) Inventor: LI, Fuhai, Hangzhou, Zhejiang 310051 (CN); GENG, Mingxing, Hangzhou, Zhejiang 310051 (CN); MA, Zuguo, Hangzhou, Zhejiang 310051 (CN); BIAN, Jianfeng, Hangzhou, Zhejiang 310051 (CN)
(74) Representative: Kraus & Lederer PartGmbB
(86) International application number: PCT/CN2024/089872
(87) International publication number: WO 2024/239907

(57) **Abstract**

A linear bearing (100), an axially telescopic adjustment assembly (200), and a vehicle (1000). The linear bearing (100) is used for an axially telescopic adjustment assembly (200) of a vehicle (1000). The linear bearing (100) comprises two guide rail members (10) and a rolling member (20). The two guide rail members (10) are slidably connected. The two guide rail members (10) are respectively fixed on a base (40) and a slidable plate (30) of the axial telescopic adjustment assembly (200), so that the slidable plate (30) is slidably arranged on the base (40). The rolling member (20) is disposed between the two guide rail members (10). The rolling member (20) is configured to roll when the two guide rail members (10) slide relative to each other so as to reduce the friction between the two guide rail members (10).

## Description

### PRIORITY INFORMATION

This application claims priority to and benefits of Chinese patent application No. 202310596249.2, filed with China National Intellectual Property Administration on May 23, 2023, the entire contents of which are incorporated herein by reference.

### FIELD

The present disclosure relates to the field of vehicle technologies, and more particularly, to a linear bearing, an axially telescopic adjustment assembly, and a vehicle.

### BACKGROUND

A vehicle includes a steering column for controlling steering of the vehicle. The steering column is provided with an axially telescopic adjustment structure. Existing axially telescopic adjustment mechanisms mostly adopt a spline sliding pair and a telescopic tube structure for telescopic adjustment. In a telescopic adjustment process, a large sliding friction force needs to be overcome, and sliding friction is prone to cause wear. After a long time, a fit clearance between members will be increased, which is prone to noise problems.

### SUMMARY

An embodiment of the present disclosure provides a linear bearing, an axially telescopic adjustment assembly, and a vehicle.

A linear bearing according to an embodiment of the present disclosure is provided. The linear bearing is used for an axially telescopic adjustment assembly of a vehicle. The linear bearing includes two guide rail members and a rolling member. The two guide rail members are slidably connected with each other. The two guide rail members are respectively fixed to a base and a slidable plate of the axially telescopic adjustment assembly, to enable the slidable plate to be slidably disposed on the base.

The rolling member is disposed between the two guide rail members. The rolling member is configured to roll when the two guide rail members slide relative to each other, to reduce friction between the two guide rail members.

The above-described linear bearing, by providing the rolling member between the two guide rail members, converts sliding friction between the two guide rail members into rolling friction to reduce the friction. Wear of components can also be reduced. In this way, mismatch caused by a large gap between the components due to the wear can be avoided, reducing generation of noise.

In some embodiments, each of the two guide rail members includes a body in a rectangular plate shape and claws extending from two ends of the body in a length direction of the body. The claws are configured to fix the corresponding guide rail member to the base or the slidable plate.

In some embodiments, the body has an inner surface on which the rolling member rolls and an outer surface opposite to the inner surface. Each of the claws is in a rectangular sheet shape and bent towards the outer surface. Each of the claws includes a gripping segment connected to the body and a guide segment connected to an end of the gripping segment away from the body. An angle between the gripping segment and the outer surface is less than an angle between the guide segment and the outer surface.

In some embodiments, each of the claws has a width less than a width of the body and is located at a middle part of the body in a width direction of the body. Each of the guide rail members further includes end flanges extending from the two ends of the body in the length direction of the body. The end flanges are located at two sides of the respective claw. Each of the end flanges is in a rectangular sheet shape and bent towards the inner surface.

In some embodiments, each of the two guide rail members includes a body in a rectangular plate shape and side flanges extending from two ends of the body in a width direction of the body. The side flanges of one of the two guide rail members are slidably connected with the side flanges of the other one of the two guide rail members to enable the two guide rail members to be slidably connected to each other.

In some embodiments, the rolling member includes a rolling support in a rectangular plate shape and a needle roller in a cylindrical shape. The rolling support has a mounting opening and a roller shaft disposed in the mounting opening. The needle roller is rotatably connected to the roller shaft. The rolling member is configured to roll between the two guide rail members by means of the needle roller.

In some embodiments, the rolling support has a notch extending from one end of the rolling support to the other end of the rolling support. The rolling support is configured that the rolling member is restricted between the two guide rail members by an engagement of a corresponding end of the side flanges in the notch.

In some embodiments, a plurality of needle rollers are provided and arranged in sequence from one end of the rolling support to the other end of the rolling support.

In some embodiments, the rolling support has a chamfer formed on a side of the rolling support that is opposite to the notch.

An axially telescopic adjustment assembly according to an embodiment of the present disclosure for a vehicle includes a base and the linear bearing according to any one of the above-described embodiments. The linear bearing is slidably connected to the base.

The above-described axially telescopic adjustment assembly, by providing the rolling member between the two guide rail members, converts the sliding friction between the two guide rail members into the rolling friction to reduce the friction. The wear of components can also be reduced. In this way, the mismatch caused by the large gap between the components due to the wear can be avoided, reducing the generation of the noise.

A vehicle according to an embodiment of the present disclosure includes the axially telescopic adjustment assembly according to the above-described embodiments.

The above-described vehicle, by providing the rolling member between the two guide rail members, converts the sliding friction between the two guide rail members into the rolling friction to reduce the friction. The wear of components can also be reduced. In this way, the mismatch resulting from the large gap between the components due to the wear can be avoided, reducing the generation of the noise.

Additional aspects and advantages of the present disclosure will be provided at least in part in the following description, or will become apparent at least in part from the following description, or can be learned from practicing of the present disclosure.

### BRIEF DESCRIPTION OF THE DRAWINGS

The above and/or additional aspects and advantages of the present disclosure will become more apparent and more understandable from the following description of embodiments taken in conjunction with the accompanying drawings.
FIG. 1 is a schematic structural view of an axially telescopic adjustment assembly according to an embodiment of the present disclosure.
FIG. 2 is a schematic structural exploded view of a part of a linear bearing according to an embodiment of the present disclosure.
FIG. 3 is an enlarged view of part A in FIG. 2.
FIG. 4 is a partial cross-sectional view taken along a line B-B in FIG. 2.
FIG. 5 is an enlarged view of part C in FIG. 2.
FIG. 6 is a schematic structural view of another part of a linear bearing according to an embodiment of the present disclosure.
FIG. 7 is a cross-sectional view taken along a line D-D in FIG. 6.
FIG. 8 is a schematic structural view of a vehicle according to an embodiment of the present disclosure.

Description of reference numerals of the accompanying drawings:
100, linear bearing; 10, guide rail member; 12, body; 13, inner surface; 14, outer surface; 15, claw; 16, gripping segment; 17, guide segment; 18, end flange; 19, side flange; 20, rolling member; 22, rolling support; 23, mounting opening; 24, roller shaft; 25, notch; 26, needle roller; 30, slidable plate; 40, base; 42, groove; 46, mounting portion;
200, axially telescopic adjustment assembly;
300, chassis;
1000, vehicle.

### DETAILED DESCRIPTION

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limit, the present disclosure.

In the description of the present disclosure, it should be understood that the orientation or the position indicated by terms such as "center", "longitudinal", "lateral", "length", "width", "thickness", "over", "below", "front", "rear", "left", "right", "vertical", "horizontal", "top", "bottom", "inner", "outer", "clockwise", and "anti-clockwise" should be construed to refer to the orientation or the position as shown in the drawings, and is only for the convenience of describing the present disclosure and simplifying the description, rather than indicating or implying that the pointed device or element must have a specific orientation, or be constructed and operated in a specific orientation, and therefore cannot be understood as a limitation to the present disclosure. In the description of the present disclosure, "plurality" means at least two, unless otherwise specifically defined.

In the description of the present disclosure, it should be noted that, unless otherwise clearly specified and limited, terms such as "install", "connect", "connect to", and the like should be understood in a broad sense. For example, it is possible to provide a fixed connection or a detachable connection or an integral connection for forming as one piece; mechanical connection or electrical connection; direct connection or indirect connection through an intermediate member. Further, the terms may refer to the internal communication between two components or the interaction relationship between two components. For those skilled in the art, the specific meaning of the above-described terms in the present disclosure can be understood according to specific circumstances.

A number of embodiments or examples are provided in the disclosure of the present disclosure to implement different structures of the present disclosure. To simplify the disclosure of the present disclosure, components and arrangements of particular examples will be described below, which are, of course, examples only and are not intended to limit the present disclosure. Further, reference numerals and/or reference letters may be repeated in different examples of the present disclosure. Such repetition is for the purpose of simplicity and clarity and does not indicate any relationship between various embodiments and/or arrangements in question. In addition, various examples of specific processes and materials are provided in the present disclosure. However, those skilled in the art may envisage applications of other processes and/or the use of other materials.

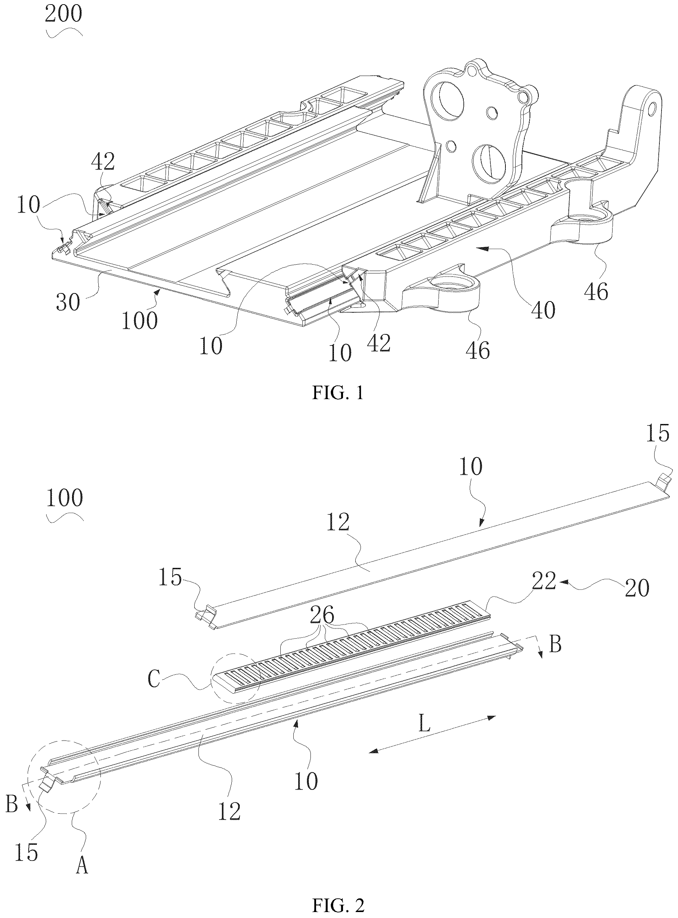

As illustrated in to FIG. 1 and FIG. 2, a linear bearing 100 according to an embodiment of the present disclosure is provided. The linear bearing 100 is used for an axially telescopic adjustment assembly 200 of a vehicle 1000. The linear bearing 100 includes two guide rail members 10 and a rolling member 20. The two guide rail members 10 are slidably connected with each other. The two guide rail members 10 are respectively fixed to a base 40 and a slidable plate 30 of the axially telescopic adjustment assembly 200, to enable the slidable plate 30 to be slidably disposed on the base 40. The rolling member 20 is disposed between the two guide rail members 10. The rolling member 20 is configured to roll when the two guide rail members 10 slide relative to each other, to reduce friction between the two guide rail members 10.

The above-described linear bearing 100, by providing the rolling member 20 between the two guide rail members 10, converts sliding friction between the two guide rail members 10 into rolling friction to reduce the friction. Wear of components can also be reduced. In this way, mismatch resulting from a large gap between the components due to the wear can be avoided, reducing generation of noise.

Specifically, in an embodiment illustrated in FIG. 1, the two guide rail members 10 and the rolling member 20 are disposed at each side of the linear bearing 100. The two guide rail members 10 may cooperate and are slidably connected with each other. The axially telescopic adjustment assembly 200 is provided with the base 40. The linear bearing 100 is provided with the slidable plate 30. One of the two guide rail members 10 may be fixedly disposed on the base 40, and the other one of the two guide rail members 10 may be fixedly disposed on the slidable plate 30. In an embodiment, the two guide rail members 10 may be fixed to the base 40 and the slidable plate 30, respectively. When the two guide rail members 10 slide relative to each other, the slidable plate 30 may slide relative to the base 40. The rolling member 20 may be disposed between two guide rails. In an embodiment, when the two guide rail members 10 slide relative to each other, the rolling member 20 may roll between the two guide rail members 10, in such a manner that the sliding friction between the two guide rail members 10 can be converted into the rolling friction, reducing the friction between the two guide rail members 10. Also, the wear of the components can be reduced. In this way, the mismatch caused by the large gap between the components due to the wear can be avoided, reducing the generation of noise.

As illustrated in FIG. 2, in some embodiments, each of the two guide rail members 10 includes a body 12 in a rectangular plate shape and claws 15 extending from two ends of the body 12 in a length direction of the body 12. The claws 15 are configured to fix the corresponding guide rail member 10 to the base 40 or the slidable plate 30.

In this way, each of the guide rail members 10 can be fixed by the claws 15, which have a simple structure and are easy to implement.

Specifically, in an embodiment illustrated in FIG. 2, each of the guide rail members 10 may include the body 12 and the claws 15. The body 12 may be in the rectangular plate shape. The length direction of the body 12 is denoted by "L". The claws 15 may extend, in a direction away from the body 12, from the two ends of the body 12 in a length direction L of the body 12. In FIG. 1, the base 40 has a groove 42 at a side of the base 40. The corresponding claw 15 may be disposed in the groove 42, in such a manner that the corresponding guide rail member 10 may be fixed on the base 40. In an embodiment, the corresponding guide rail member 10 may be fixed on the slidable plate 30 by the claws 15. That is, the claws 15 have a simple structure and are easy to implement. Each of the guide rail members 10 may be fixed by the claws 15, preventing the two guide rail members 10 from falling off when the two guide rail members 10 slide relative to each other.

As illustrated in FIG. 1, FIG. 3, and FIG. 4, in some embodiments, the body 12 has an inner surface 13 on which the rolling member 20 rolls and an outer surface 14 opposite to the inner surface 13. Each of the claws 15 is in a rectangular sheet shape and bent towards the outer surface 14. Each of the claws 15 includes a gripping segment 16 connected to the body 12 and a guide segment 17 connected to an end of the gripping segment 16 away from the body 12. An angle between the gripping segment 16 and the outer surface 14 is less than an angle between the guide segment 17 and the outer surface 14.

In this way, the corresponding guide rail members 10 may be guided and engaged into the base 40 or the slidable plate 30 by the guide segment 17, and then firmly engaged with the base 40 or the slidable plate 30 by the gripping segment 16.

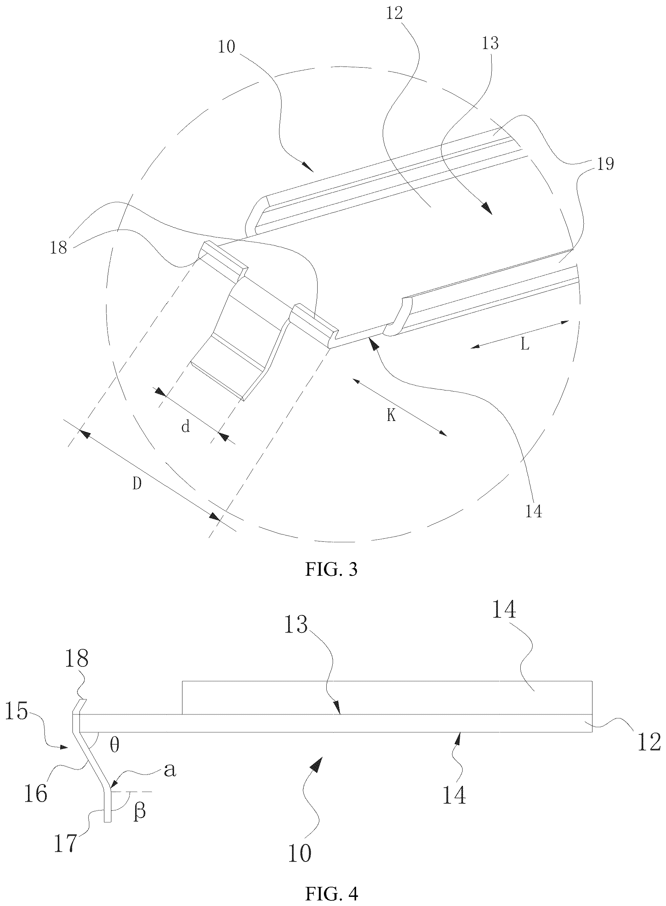

Specifically, in an embodiment illustrated in FIG. 4, the body 12 may have the inner surface 13 and the outer surface 14. The rolling member 20 may roll on the inner surface 13. The outer surface 14 may be disposed at a surface of the body 12 opposite to the inner surface 13. Each of the claws 15 may be in the rectangular sheet shape and bent towards the outer surface 14. Each of the claws 15 includes the gripping segment 16 and the guide segment 17. An end of the gripping segment 16 may be connected to the body 12. The guide segment 17 may be connected to an end of the gripping segment 16 away from the body 12. As illustrated in FIG. 4, the angle between the gripping segment 16 and the outer surface 14 may be denoted by "θ", and the angle between the guide segment 17 and the outer surface 14 may be denoted by "β". In an embodiment, an angle θ between the gripping segment 16 and the outer surface 14 may be less than an angle β between the guide segment 17 and the outer surface 14. In this way, the engagement into the base 40 or the slidable plate 30 is realized by the guiding of the guide segment 17, and then the firm engagement into the base 40 or the slidable plate 30 is realized by the gripping segment 16.

In addition, a chamfered part is formed between the gripping segment 16 and the guide segment 17 to facilitate smooth transition. The chamfered part may be denoted by "a". The chamfered part a is formed between the gripping segment 16 and the guide segment 17. When the guide segment 17 extends into and is engaged with the base 40 or the slidable plate 30, the gripping segment 16 can be smoothly engaged with the base 40 or the slidable plate 30 through the chamfered part a.

As illustrated in FIG. 3, in some embodiments, each of the claws 15 has a width less than a width of the body 12 and is located at a middle part of the body 12 in a width direction of the body 12. Each of the guide rail members 10 further includes end flanges 18 extending from the two ends of the body 12 in the length direction of the body 12. The end flanges 18 are located at two sides of the respective claw 15. Each of the end flanges 18 is in a rectangular sheet shape and bent towards the inner surface 13.

In this way, the rolling member 20 may be restricted between the two guide rail members 10, preventing the rolling member 20 from being separated from the two guide rail members 10.

Specifically, in an embodiment illustrated in FIG. 3, the width of each of the claws 15 may be denoted by "d", the width of the body 12 may be denoted by "D", and the width direction of the body 12 may be denoted by "K". A width d of each of the claws 15 is less than a width D of the body 12. Each of the claws 15 is located at the middle part of the body 12 in the width direction D of the body 12. Each of the guide rail members 10 further includes the end flanges 18 extending from the two ends of the body 12 in the length direction L of the body 12. Each of the end flanges 18 is in the rectangular sheet shape. The end flanges 18 are located at the two sides of the respective claw 15. Each of the end flanges 18 is bent towards the inner surface 13. In this way, the rolling member 20 can be limited to roll within the two guide rail members 10, preventing the rolling member 20 from being separated from the two guide rail members 10.

As illustrated in FIG. 2 and FIG. 3, in some embodiments, each of the two guide rail members 10 includes the body 12 in the rectangular plate shape and side flanges 19 extending from the two ends of the body 12 in the width direction of the body 12. The side flanges 19 of one of the two guide rail members 10 are slidably connected with the side flanges 19 of the other one of the two guide rail members 10 to enable the two guide rail members 10 to be slidably connected to each other.

In this way, the two guide rail members 10 may be slidably connected to each other by the side flanges 19. Also, the two guide rail members 10 may be slidably connected to each other in the length direction of the body 12, preventing the two guide rail members 10 from being separated from each other in the width direction of the body 12.

Specifically, as illustrated in FIG. 3, a guide rail may include the body 12 and the side flanges 19. The body 12 may be in the rectangular plate shape. The side flanges 19 may be formed at two ends of the body 12 in the width direction of the body 12 and extend, in a direction away from the body 12, from the two ends of the body 12 in the width direction of the body 12. In an embodiment, the inner surfaces 13 of the two guide rail members 10 are opposite to each other and cooperate with each other. The side flanges 19 of one of the two guide rail members 10 are slidably connected to the side flanges 19 of the other one of the two guide rail members 10, in such a manner that the two guide rail members 10 may be slidably connected to each other in the length direction of the body 12, preventing the two guide rail members 10 from being separated from each other in the width direction of the body 12.

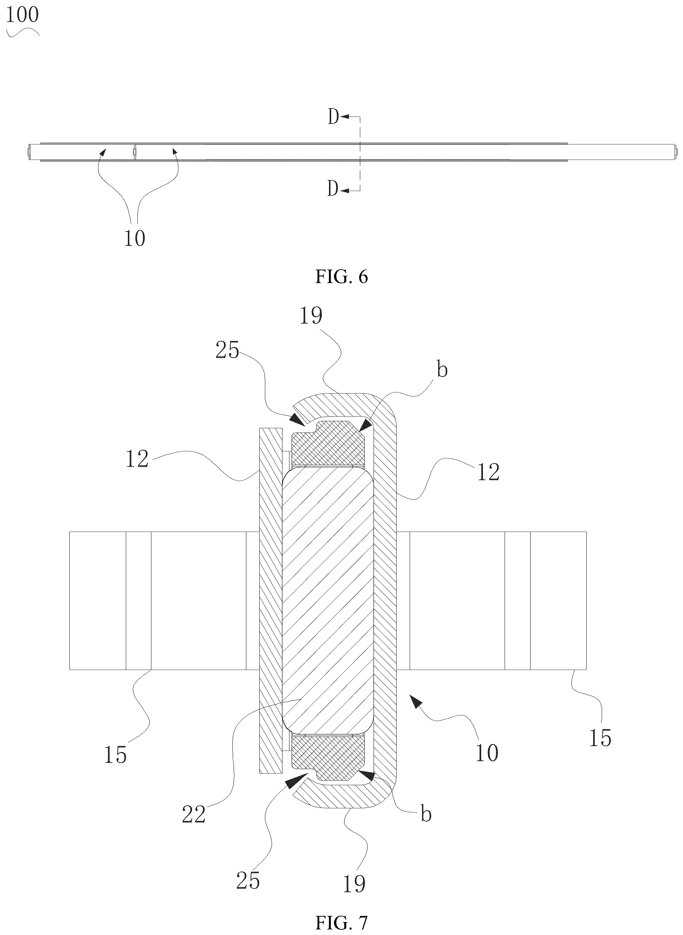

It should be noted that, in an embodiment illustrated in FIG. 7, one guide rail member 10 is provided with the side flanges 19, while the other guide rail member 10 is not provided with the side flanges 19. The side flanges 19 of one guide rail member 10 may also be fitted to the body 12 of the other guide rail member 10, to enable the two guide rail members 10 to be slidably connected to each other.

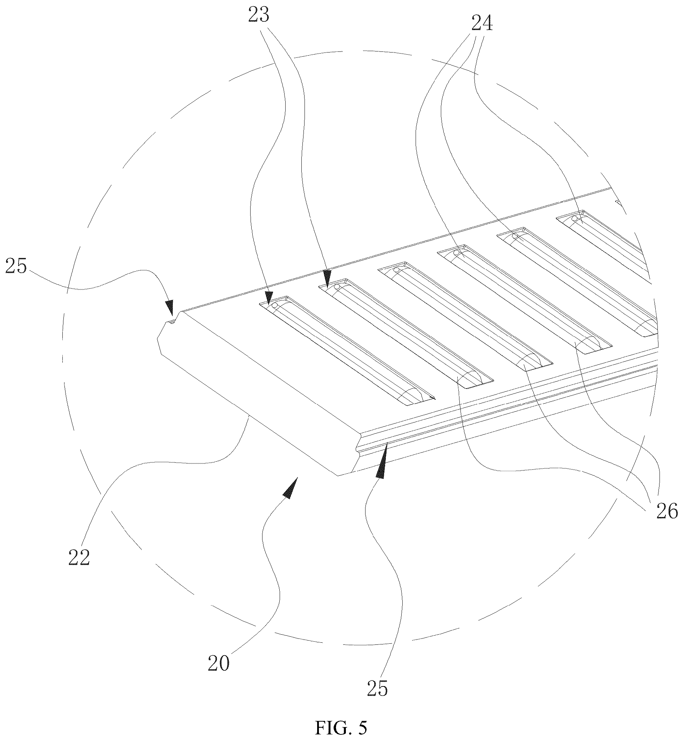

As illustrated in FIG. 2 and FIG. 5, in some embodiments, the rolling member 20 includes a rolling support 22 in a rectangular plate shape and a needle roller 26 in a cylindrical shape. The rolling support 22 has a mounting opening 23 and a roller shaft 24 disposed in the mounting opening 23. The needle roller 26 is rotatably connected to the roller shaft 24. The rolling member 20 is configured to roll between the two guide rail members 10 by means of the needle roller 26.

In this way, the rolling member 20 is configured to roll by means of the needle roller 26, which enables the sliding friction between the two guide slide members 10 to be converted into the rolling friction, reducing the friction and the wear of the components.

Specifically, in an embodiment illustrated in FIG. 5, the rolling member 20 may include the rolling support 22 and the needle roller 26. The rolling support 22 may be in the rectangular plate shape. The needle roller 26 may be in the cylindrical shape. The rolling support 22 has the mounting opening 23 formed at a surface of the rolling support 22. The mounting opening 23 may be in a rectangular shape. The rolling support 22 includes the roller shaft 24 disposed in the mounting opening 23. The roller shaft 24 may penetrate the needle roller 26, and is rotatably connected to the needle roller 26. In an embodiment, the rolling member 20 is rotatably connected to the roller shaft 24 of the rolling support 22 through the needle roller 26. When the two guide rail members 10 slide relative to each other, the rolling member 20 may roll, in such a manner that the sliding friction between the two guide rail members 10 can be converted into the rolling friction. Accordingly, the friction and the wear of the components are reduced.

As illustrated in FIG. 5, FIG. 6, and FIG. 7, in some embodiments, the rolling support 22 has a notch 25 extending from one end of the rolling support 22 to the other end of the rolling support 22. The rolling support 22 is configured that the rolling member 20 is restricted between the two guide rail members 10 by an engagement of a corresponding end of the side flanges 19 in the notch 25.

In this way, the rolling member 20 can be further restricted between the two guide rail members 10, preventing the rolling member 20 from being separated from the guide rail members 10.

Specifically, in an embodiment illustrated in FIG. 5, each of the two sides of the rolling support 22 may have the notch 25. The notch 25 is formed to extend from one end of the rolling support 22 to the other end of the rolling support 22. The notch 25 may be in a stepped shape. In an embodiment illustrated in FIG. 7, the corresponding end of the side flanges 19, that is away from the body 12 connected to the side flanges 19, may be engaged with the notch 25. In an embodiment, the rolling support 22 is configured that the corresponding end of the side flanges 19, that is away from the body 12 connected to the side flanges 19, is engaged in the notch 25. Thus, the rolling member 20 is restricted between the two guide rail members 10, preventing the rolling member 20 from being separated from the guide rail members 10.

As illustrated in FIG. 2 and FIG. 5, in some embodiments, a plurality of needle rollers 26 are provided and arranged in sequence from one end of the rolling support 22 to the other end of the rolling support 22.

In this way, the plurality of needle rollers 26 enable the rolling member 20 to roll in a balanced manner, allowing the rolling member 20 to roll more smoothly.

Specifically, in an embodiment illustrated in FIG. 2, the plurality of needle rollers 26 are disposed on the rolling support 22. The plurality of needle rollers 26 may be evenly arranged in sequence from one end of the rolling support 22 to the other end of the rolling support 22. In this way, the plurality of needle rollers 26 enable the rolling member 20 to roll in a balanced manner, allowing the rolling member 20 to roll more smoothly.

As illustrated in FIG. 7, in some embodiments, the rolling support 22 has a chamfer formed on a side of the rolling support 22 opposite to the notch 25.

In this way, the rolling member 20 is configured for easy assembly with the guide rail members 10 and is easily fitted into the guide rail members 10, improving efficiency of assembly.

Specifically, in an embodiment illustrated in FIG. 7, the rolling support 22 has the chamfer formed on the side of the rolling support 22 opposite to the notch 25, and the notch may be denoted by "b". In an embodiment, in a process that the rolling member 22 is fitted into the guide rail members 10, when the rolling member 20 approaches to the ends of the side flanges 19 that are away from the body 12 to which the side flanges 19 are connected, a chamfer b formed on the side of the rolling support 22 opposite to the notch 25 is provided to facilitate pushing-aside of one end of the each side flange 19. In this way, this configuration facilitates the installation of the rolling member 20 onto the guide rail members 10, and the rolling member 20 is easily fitted into the guide rail members 10, improving the efficiency of assembly.

As illustrated in FIG. 1, the axially telescopic adjustment assembly 200 according to an embodiment of the present invention is used in the vehicle 1000. The axially telescopic adjustment assembly 200 includes the base 40 and the linear bearing 100 according to any one of the above-described embodiments. The linear bearing 100 is slidably connected to the base 40.

The above-described axially telescopic adjustment assembly 200, by providing the rolling member 20 between the two guide rail members 10, converts the sliding friction between the two guide rail members 10 into the rolling friction to reduce the friction. The wear of the components can also be reduced. In this way, the mismatch resulting from the large gap between the components due to the wear can be avoided, reducing the generation of noise.

Specifically, the axially telescopic adjustment assembly 200 includes the base 40 and the linear bearing 100. The linear bearing 100 may be in the rectangular plate shape. A mounting portion 46 is further disposed at a side surface of the base 40. The base 40 may be fixedly connected to the vehicle 1000 by the mounting portion 46. The linear bearing 100 may be slidably connected to the base 40 by providing the rolling member 20 between two guide rail members 10. Accordingly, the sliding friction between the two guide rail members 10 may be converted into rolling friction to reduce the friction. The wear of the components can also be reduced. In this way, the mismatch caused by the large gap between the components due to the wear can be avoided, reducing the generation of noise.

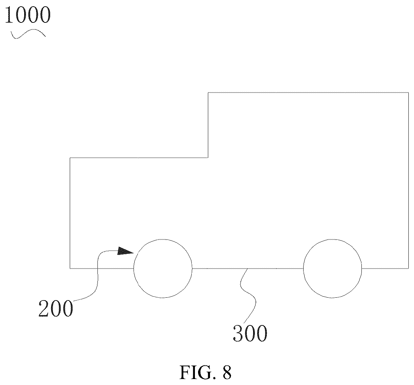

As illustrated in FIG. 8, the vehicle 1000 according to an embodiment of the present disclosure includes the axially telescopic adjustment assembly 200 of the above-described embodiments.

The above-described vehicle 1000, by providing the rolling member 20 between the two guide rail members 10, converts the sliding friction between the two guide rail members 10 into the rolling friction to reduce the friction. The wear of the components can also be reduced. In this way, the mismatch caused by the large gap between the components due to the wear can be avoided, reducing the generation of noise.

Specifically, the vehicle 1000 includes, but is not limited to, a fuel vehicle, an electric vehicle, and a gas vehicle. The vehicle 1000 further includes a chassis 300. The axially telescopic adjustment assembly 200 may be disposed on the chassis 300. In an embodiment, the rolling member 20 is disposed between the two guide rail members 10 in the axially telescopic adjustment assembly 200 of the vehicle 1000, in such a manner that the sliding friction between the two guide rail members 10 can be converted into the rolling friction to reduce the friction. The wear of the components can also be reduced. Accordingly, the mismatch resulting from the large gap between the components due to the wear can be avoided, reducing the generation of noise.

Reference throughout this specification to "an embodiment", "some embodiments", "an illustrative embodiment", "an example", "a specific example", or "some examples" means that a particular feature, structure, material, or characteristic described in connection with the embodiment or example is included in at least one embodiment or example of the present disclosure. The appearances of the above phrases in various places throughout this specification are not necessarily referring to the same embodiment or example. Further, the particular features, structures, materials, or characteristics may be combined in any suitable manner in one or more embodiments or examples.

Although embodiments of the present disclosure have been illustrated and described, it is conceivable for those skilled in the art that various changes, modifications, replacements, and variations can be made to these embodiments without departing from the principles and spirit of the present disclosure. The scope of the present disclosure shall be defined by the claims and their equivalents.

## Claims

1. A linear bearing for an axially telescopic adjustment assembly of a vehicle, the linear bearing comprising:
two guide rail members slidably connected with each other, the two guide rail members being respectively fixed to a base and a slidable plate of the axially telescopic adjustment assembly, to enable the slidable plate to be slidably disposed on the base; and
a rolling member disposed between the two guide rail members, the rolling member being configured to roll when the two guide rail members slide relative to each other, to reduce friction between the two guide rail members.

2. The linear bearing according to claim 1, wherein each of the two guide rail members comprises a body in a rectangular plate shape and claws extending from two ends of the body in a length direction of the body, the claws being configured to fix the corresponding guide rail member to the base or the slidable plate.

3. The linear bearing according to claim 2, wherein the body has an inner surface on which the rolling member rolls and an outer surface opposite to the inner surface, wherein:
each of the claws is in a rectangular sheet shape and bent towards the outer surface; and
each of the claws comprises a gripping segment connected to the body and a guide segment connected to an end of the gripping segment away from the body, an angle between the gripping segment and the outer surface being less than an angle between the guide segment and the outer surface.

4. The linear bearing according to claim 3, wherein:
each of the claws has a width less than a width of the body and is located at a middle part of the body in a width direction of the body; and
each of the guide rail members further comprises end flanges extending from the two ends of the body in the length direction of the body, the end flanges being located at two sides of the respective claw, and each of the end flanges being in a rectangular sheet shape and bent towards the inner surface.

5. The linear bearing according to claim 1, wherein each of the two guide rail members comprises a body in a rectangular plate shape and side flanges extending from two ends of the body in a width direction of the body, the side flanges of one of the two guide rail members being slidably connected with the side flanges of the other one of the two guide rail members to enable the two guide rail members to be slidably connected to each other.

6. The linear bearing according to claim 5, wherein the rolling member comprises a rolling support in a rectangular plate shape and a needle roller in a cylindrical shape, the rolling support having a mounting opening and a roller shaft disposed in the mounting opening, the needle roller being rotatably connected to the roller shaft, and the rolling member being configured to roll between the two guide rail members by means of the needle roller.

7. The linear bearing according to claim 6, wherein the rolling support has a notch extending from one end of the rolling support to the other end of the rolling support, and the rolling support is configured that the rolling member is restricted between the two guide rail members by an engagement of a corresponding end of the side flanges in the notch.

8. The linear bearing according to claim 6, wherein a plurality of needle rollers are provided and arranged in sequence from one end of the rolling support to the other end of the rolling support.

9. The linear bearing according to claim 7, wherein the rolling support has a chamfer formed on a side of the rolling support opposite to the notch.

10. An axially telescopic adjustment assembly for a vehicle, comprising:
a base; and
a linear bearing according to any one of claims 1 to 9, the linear bearing being slidably connected to the base.

11. A vehicle, comprising an axially telescopic adjustment assembly according to claim 10.
